**Europäisches Patentamt**

**European Patent Office**

**Office européen des brevets**

(19)

(11) Numéro de publication : **0 423 027 B1**

(12) **FASCICULE DE BREVET EUROPEEN**

(45) Date de publication du fascicule du brevet :
**08.07.92 Bulletin 92/28**

(51) Int. Cl.⁵ : **E06B 11/00,** H01H 27/00,
B61B 12/06, F16P 3/12,
E01F 13/00

(21) Numéro de dépôt : **90402825.5**

(22) Date de dépôt : **10.10.90**

(54) Dispositif de sécurité actionnable par un corps en mouvement, en particulier portillon de sécurité.

(30) Priorité : **11.10.89 FR 8913286**

(43) Date de publication de la demande :
**17.04.91 Bulletin 91/16**

(45) Mention de la délivrance du brevet :
**08.07.92 Bulletin 92/28**

(84) Etats contractants désignés :
**AT CH DE ES IT LI SE**

(56) Documents cités :
**FR-A- 1 461 487**
**FR-A- 2 163 987**
**FR-A- 2 544 125**

(73) Titulaire : **VINCENT DE ARAUJO, Manuel
Alexandre
Betton-Bettonet
F-73390 Chamoux-sur-Gelon (FR)**

(72) Inventeur : **VINCENT DE ARAUJO, Manuel
Alexandre
Betton-Bettonet
F-73390 Chamoux-sur-Gelon (FR)**

(74) Mandataire : **Casalonga, Axel et al
BUREAU D.A. CASALONGA - JOSSE
Morassistrasse 8
W-8000 München 5 (DE)**

EP 0 423 027 B1

Jouve, 18, rue Saint-Denis, 75001 PARIS

**Description**

La présente invention concerne un dispositif de sécurité actionnable notamment par un corps en mouvement tel qu'une personne ou un objet, destiné en particulier à constituer un portillon de sécurité.

Dans les installations à câbles pour le transport de personnes, en particulier de skieurs, des dispositifs de sécurité doivent être prévus pour, dans la plupart des cas, provoquer l'arrêt de l'installation. De tels dispositifs sont communément appelés des portillons de sécurité, de fin de piste, d'anti-contournement ou de non-débarquement. En effet, il est en particulier souhaitable de détecter le passage d'un usager en un endroit où il ne devrait pas normalement se trouver, de détecter sur un télésiège un passager qui n'aurait pas quitté son siège sur l'aire d'arrivée ou un garde-corps-repose-pied qui n'aurait pas été relevé précédemment à l'embarquement, ou de détecter sur un téléski un usager qui n'aurait pas lâché son agrès à l'extrémité de la plate-forme d'arrivée ou la partie extensible d'un agrès de remorquage qui n'aurait pas repris sa position haute après avoir été lâché par un usager sur la plate-forme d'arrivée.

Pour résoudre ces problèmes de sécurité, différents dispositifs ont déjà été proposés.

On connaît en particulier (voir FR-A-2 544 125) un dispositif de sécurité qui comprend un poteau ancré verticalement au sol et sur lequel est montée une barre rigide rotative qui actionne un interrupteur électrique de commande d'arrêt de l'installation lorsqu'elle est sollicitée en rotation. Ce dispositif de sécurité connu présente cependant des inconvénients. En effet, si l'action exercée sur la barre a une direction différente de celle susceptible de provoquer sa rotation, l'interrupteur électrique ne sera pas activé et la barre constitue de ce fait un obstacle pour le skieur. Suivant l'épaisseur de la neige, la position de la barre doit être fréquemment réglée de manière à maintenir une hauteur déterminée entre cette barre et la surface supérieure de la neige. Le poteau étant ancré au sol, il doit présenter une hauteur suffisante et résister à la poussée due au rampement du manteau neigeux sur la pente. Le poteau constitue un danger pour le skieur qui risque de s'y empaler. En outre, la présence à demeure du poteau complique les travaux d'aménagement des aires d'arrivée notamment en cas de chute de neige importante ou d'emploi des engins mécanisés.

Un autre dispositif de sécurité connu est constitué par un fil tendu entre deux supports. Ce fil peut être constitué par un conducteur électrique susceptible d'être arraché lors du passage de l'usager, ou bien par un cordon relié à l'organe de commande d'un interrupteur électrique, comme décrit dans le brevet FR-A-2163987. Le principal inconvénient de ce dispositif de sécurité connu réside dans le fait que le fil peut s'enrouler autour du skieur ou autour de l'agrès de remorquage et risque ainsi de le retenir dangereusement, l'arrêt de l'installation n'étant jamais instantané.

La présente invention a pour but de remédier aux inconvénients des dispositifs de sécurité connus et propose un dispositif de sécurité selon la revendication 1 permettant notamment d'éviter toute blessure des personnes ou toute détérioration de materiel qui seraient dues au dispositif de sécurité lui-même, quelles que soient les circonstances.

Le dispositif de sécurité de l'invention peut être avantageusement utilisé dans le domaine des installations de transport de skieurs mais peut naturellement être utilisé dans tous domaines où l'on doit détecter le passage de personnes ou d'objets.

Le dispositif de sécurité selon l'invention, actionnable notamment par un corps en mouvement tel qu'une personne ou un objet, constituant en particulier un portillon de sécurité, comprend un poteau portant à distance du sol une barre transversale, des moyens de liaison de la barre au poteau et des moyens de liaison du poteau au sol. De préférence, lesdits moyens de liaison de la barre au poteau comprennent des moyens de maintien susceptibles de libérer la barre lorsqu'elle est soumise à un effort dû au passage ou au mouvement dudit corps ainsi que des moyens de connexion électriques sollicités lors de la libération de la barre et ledit poteau ou ses moyens de liaison au sol sont tels que ce poteau est rabattable.

De préférence, selon l'invention, les moyens de liaison de la barre au poteau sont pourvus desdits moyens de maintien libérables desdits moyens de connexion électriques.

Dans une variante préférée de l'invention, lesdits moyens de liaison de la barre au poteau comprennent un organe libérable sur lequel est fixée la barre ainsi qu'un organe de retenue fixé sur le poteau et maintenant l'organe libérable sous l'effet d'un moyen élastique.

Selon l'invention, lesdits moyens de connexion électriques peuvent avantageusement être agencés entre ledit organe libérable et ledit organe de retenue.

Selon un mode d'exécution de l'invention, ledit organe libérable est constitué par une barre conductrice de l'électricité, ledit organe de retenue comprenant des contacts électriques contre lesquels est en appui cette barre conductrice lorsqu'elle est accouplée à cet organe de retenue.

Dans un autre mode d'exécution, ledit organe libérable comprend un manchon et ledit organe de retenue comprend une partie en saillie engagée dans le manchon libérable maintenue accouplée grâce à un ressort. Dans ce cas, lesdits moyens de connexion électriques comprennent de préférence une bague conductrice montée dans ledit manchon et des contacts électriques isolés montés sur ladite partie en saillie et en contact avec cette bague lorsque le manchon et la partie en saillie sont accouplés.

Selon l'invention, lesdits moyens de liaison du poteau au sol peuvent avantageusement comprendre une articulation à axe sensiblement parallèle à la barre transversale de telle sorte que le poteau est rabattable.

Dans une exécution particulière, le dispositif de sécurité selon l'invention peut avantageusement comprendre un second poteau portant ladite barre transversale à distance du poteau précité ainsi que des moyens de fixation de la barre à ce second poteau et des moyens de fixation de ce second poteau au sol.

Selon l'invention, lesdits moyens de fixation du second poteau à la barre transversale et/ou au sol comprennent de préférence une attache souple et de préférence non détachable.

Dans une disposition particulière, le poteau portant la barre transversale est incliné vers l'avant.

Selon l'invention, l'extrémité inférieure du poteau est de préférence montée sur une plaque se posant sur le sol et fixée à ce dernier par des moyens de fixation rapides tels que des piquets.

Selon l'invention, ladite barre transversale est, dans un mode d'exécution préférée, flexible.

La présente invention sera mieux comprise à l'étude de dispositifs de sécurité actionnables par un skieur en mouvement, décrits à titre d'exemples non limitatifs et illustrés par le dessin sur lequel :

– la figure 1 montre une vue frontale en élévation d'un premier dispositif de sécurité selon l'invention ;

– la figure 2 montre une vue latérale en élévation du dispositif de sécurité de la figure 1 ;

– la figure 3 montre une vue frontale en élévation d'un second dispositif de sécurité selon la présente invention ;

– la figure 4 montre une vue latérale en élévation du dispositif de sécurité représenté sur la figure 3 ;

– la figure 5 représente une vue agrandie en coupe de la partie fonctionnelle du dispositif de sécurité représenté sur la figure 3 ;

– et la figure 6 montre une vue frontale en élévation d'un troisième dispositif de sécurité selon la présente invention.

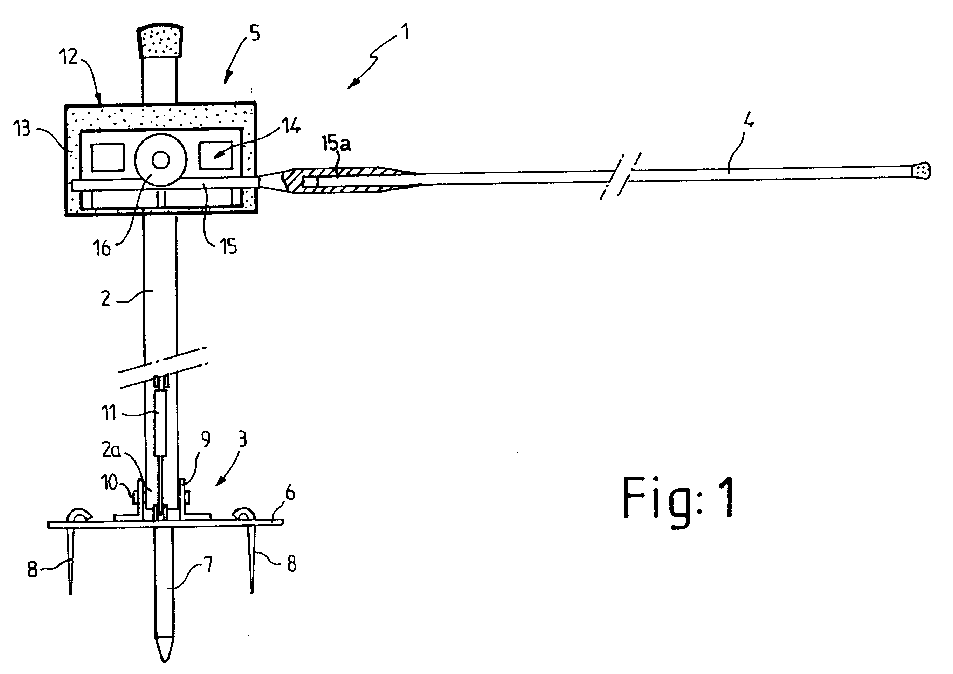

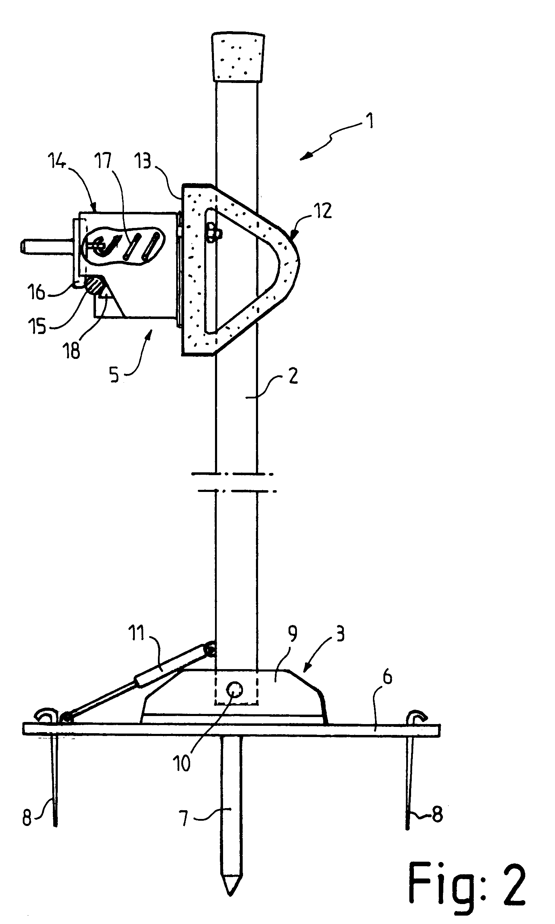

En se reportant aux figures 1 et 2, on voit qu'on a représenté un premier dispositif de sécurité repéré d'une manière générale par la référence 1 qui comprend un poteau vertical 2 dont la partie inférieure est reliée au sol grâce à des moyens de liaison repérés d'une manière générale par la référence 3 ainsi qu'une barre transversale flexible 4 montée en porte-à-faux sur le poteau 2 par des moyens de liaison repérés d'une manière générale par la référence 5, cette barre 4 s'étendant horizontalement à distance du sol.

Les moyens de liaison 3 du poteau 2 au sol comprennent une plaque 6 reposant sur le sol. Cette plaque 6 porte un piquet central 7 s'enfonçant dans le sol est muni à sa périphérie de passages dans lesquels sont engagés des piquets amovibles 8 s'enfonçant également dans le sol, de telle sorte que la plaque 6 est ancrée au sol de manière amovible et ne peut pas tourner.

Sur sa face supérieure, la plaque 6 porte une chape 9. L'extrémité inférieure 2a du poteau est montée articulée dans cette chape 9 grâce à un axe transversal 10 de telle sorte que le poteau 2 est uniquement articulé dans un plan qui s'étend perpendiculairement à la barre transversale 4. Un ressort 11, par exemple du type ressort à gaz, monté entre le poteau 2 et la plaque 6 permet de maintenir vertical ce poteau tout en autorisant son basculement vers l'avant.

Les moyens de liaison 5 comprennent un bloc-support en caoutchouc 12 qui est porté par le poteau 2 et immobilisé sur ce dernier tant dans le sens vertical qu'en rotation. Sur la face avant transversale 13 de ce bloc support 12 est fixé un organe 14 de retenue d'un organe libérable constitué par une barrette transversale 15 qui présente à l'une de ses extrémités un évidement axial 15a dans lequel est monté une extrémité de la barre transversale 4, la barrette étant à l'avant de l'organe de retenue 14.

Dans cet exemple, l'organe de retenue 14 est constitué par un dispositif équivalent au dispositif décrit dans le brevet français N° 2 544 125 du demandeur. Comme on le voit en particulier sur la figure 2, l'organe de retenue 14 comprend une rondelle frontale 16 soumise à un ressort 17 et maintenant la barrette transversale 15 de telle sorte que si cette barrette transversale 15 est soumise à un effort dont la valeur est supérieure à une valeur déterminée, quelle que soit la direction de cet effort, la barrette transversale 15 se libère.

En outre, la barrette transversale 15 est conductrice de l'électricité et l'organe de retenue 14 présente deux contacts électriques 18 en contact avec cette barrette 15 de telle sorte que lorsque cette dernière est libérée, le courant électrique ne passe plus entre les contacts électriques 18.

Le dispositif de sécurité représenté sur les figures 1 et 2 et décrit ci-dessus peut être utilisé et fonctionne de la manière suivante.

Si l'on souhaite détecter le passage d'une personne en un endroit déterminé, par exemple au-delà de l'aire d'arrivée d'un téléski ou d'un télésiège, on installe le dispositif de sécurité 1 de telle sorte que la barre flexible 4 s'étende transversalement au passage à surveiller. Pour cela, on installe la plaque 6 portant le poteau 2 sur la neige en enfonçant le piquet 7 dans la neige ainsi que les piquets auxiliaires 8, dans une position telle que le poteau puisse basculer vers l'avant dans le sens du déplacement du skieur dans le passage surveillé et on règle éventuellement la hauteur par rapport au sol de la barre transversale 4 en réglant la position du bloc en caoutchouc 13 le long du poteau 2.

Si un skieur s'engage ou tombe dans le passage surveillé, il rencontre la barre transversale 4. Cette dernière fléchit et provoque la libération de la barrette 15 de l'organe de retenue 14, la barre transversale 4 et la barrette 15 qu'elle porte se dégageant en général vers l'avant sous l'effet de la flexibilité de la barre 4. Il se peut également que le poteau 2 bascule vers l'avant mais dans tous les cas la barrette 15 se libère quelle que soit la direction de l'effort qu'elle subit. En outre, si le skieur rencontre le poteau 2, ce dernier se rabat vers l'avant.

La barrette 15 ayant été libérée, le courant ne passe plus entre les contacts électriques 18 et cette information électrique est transmise en tant qu'information de commande pour par exemple faire arrêter l'installation de transport du skieur.

Le dispositif de sécurité 1 évite tous risques de blessure du skieur. En effet, du fait de la flexibilité de la barre transversale 4, le skieur ne reçoit pas de choc. La barre transversale 4 se libérant quelle que soit la direction du mouvement du skieur, elle se dégage rapidement en s'en éloignant. Le poteau 2 étant rabattable, il ne risque pas de blesser le skieur. Dans le cas où le poteau serait flexible ou élastiquement déformable, le résultat serait identique.

Le dispositif de sécurité 1 présente également l'avantage de pouvoir être immédiatement réarmé. En effet, il suffit de récupérer la barre 4, de réaccoupler la barrette 15 à l'organe de retenue 4 et éventuellement de redisposer le poteau 2 verticalement.

En outre, le dispositif de sécurité 1 étant simplement posé par la plaque 6 sur la neige et fixé uniquement par les piquets 7 et 8, son installation et son démontage sont simples et rapides. Il peut en conséquence être changé de place, enlevé lors de l'entretien des pistes ou dans la perspective d'une chute de neige ou la nuit pour être réinstallé par la suite sur la neige.

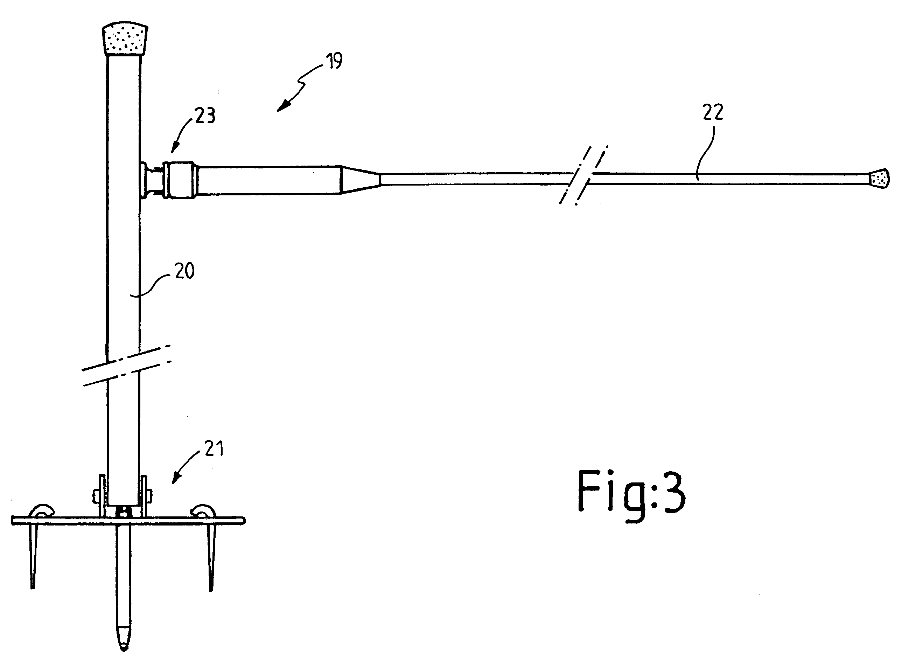

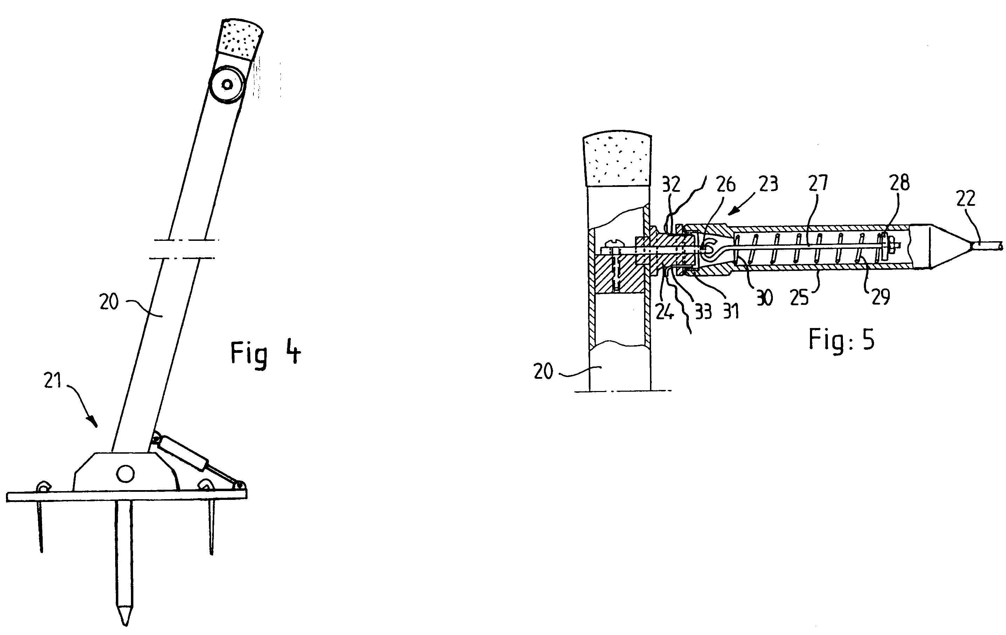

En se reportant maintenant aux figures 3 à 5, on va décrire un second dispositif de sécurité repéré d'une manière générale par la référence 19. Ce dispositif de sécurité 19 comprend un poteau 20 qui est fixé au sol par l'intermédiaire de moyens de liaison repérés d'une manière générale par la référence 21 dont la structure est identique a celle des moyens de liaison 3 du dispositif de sécurité 1 décrits précédemment. Dans cet exemple cependant, le poteau 20 n'est pas immobilisé verticalement, de manière libérable, mais est incliné vers l'avant comme on peut le voir sur la figure 4.

Le dispositif de sécurité 19 comprend, comme précédemment, une barre transversale flexible 22 montée en porte-à-faux sur le poteau 20 par l'intermédiaire de moyens de liaison repérés d'une manière générale par la référence 23.

Comme on le voit plus précisément sur la figure 5, les moyens de liaison 23 comprennent un organe de retenue constitué par une partie en saillie 24, de section cylindrique, qui est fixée latéralement sur le poteau 20 et qui s'étend transversalement, ainsi qu'un organe libérable constitué par un manchon 25 dont l'une des extrémités est engagée sur la partie en saillie 24 et dont l'autre extrémité porte, en alignement, l'une des extrémités de la barre transversale flexible 22. La partie en saillie 24 porte en son centre un pied 26 sur lequel est monté de manière articulée un tirant 27 qui s'étend dans le manchon 26 et dont l'autre extrémité est munie d'une rondelle 28, un ressort 29 étant disposé entre cette rondelle 28 et un épaulement 30 du manchon 25, situé du côté de la partie en saillie 24.

Ainsi, le manchon 25 est maintenu accouplé à la partie en saillie 24 par l'intermédiaire du ressort 29 mais peut en être désaccouplé par pivotement dans toutes les directions si, pour reprendre l'exemple précédent, un skieur déplace la barre transversale flexible 22.

Alors que dans l'exemple précédent la barrette 15 était séparable, dans cet exemple, le manchon 25 reste lié à la partie en saillie 24 par le tirant 27 et il suffit, après actionnement, de replacer le manchon 25 transversalement, d'engager sur la partie en saillie 24, pour replacer le dispositif de sécurité 19 dans sa position initiale. Dans une variante, l'effet du ressort 29 peut être suffisant pour ramener la barre transversale 22 dans sa position initiale accouplée au poteau 20 lorsque cesse l'action sur cette barre.

On voit en outre sur la figure 5 que le manchon 25 porte une douille conductrice 31 qui entoure l'extrémité de la partie en saillie 24 et que cette dernière porte deux contacts électriques 32 et 33 qui sont en contact avec la douille 31 lorsque le manchon 25 est accouplé à la partie en saillie 24. Lorsque le manchon 25 est libéré ou désaccouplé de la partie en saillie 24, la connexion électrique entre les contacts 32 et 33 par l'intermédiaire de la douille 31 est coupée, cette coupure constituant une information de commande comme dans l'exemple précédent.

Le dispositif de sécurité 19 qui vient d'être décrit présente les mêmes avantages d'utilisation et de fonctionnement que le dispositif de sécurité 1 décrit précédemment.

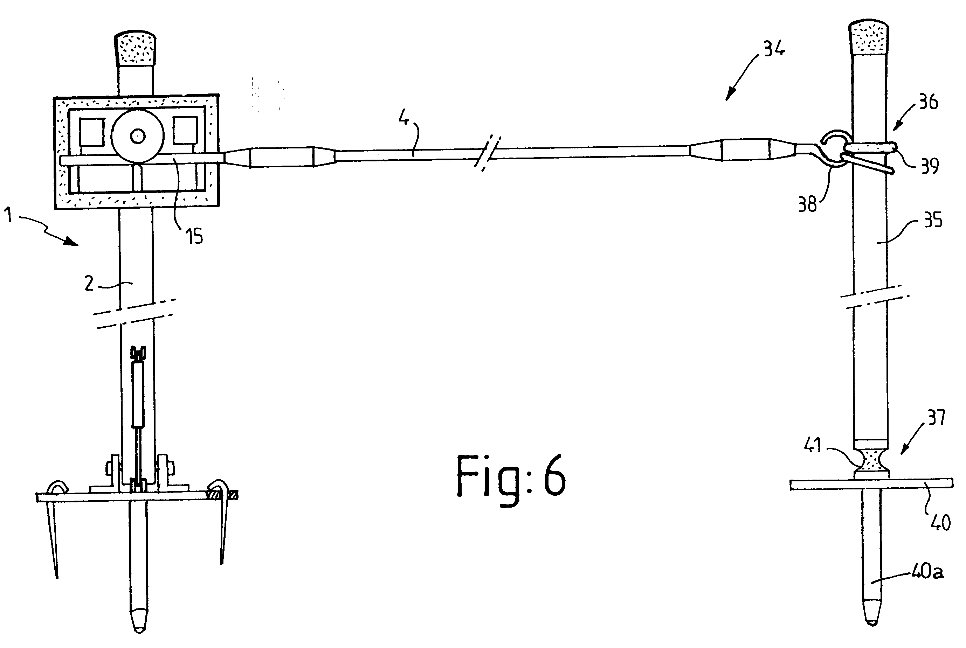

En référence à la figure 6, on voit qu'on a représenté un troisième dispositif de sécurité repéré d'une manière générale par la référence 34 qui constitue une extension du dispositif de sécurité 1 décrit précédemment en référence aux figures 1 et 2.

Ce dispositif de sécurité 34 comprend en effet le dispositif de sécurité 1 et s'en différe aussi par le fait que l'extrémité de la barre transversale flexible 4, qui précédemment était libre, est maintenant reliée à un second poteau 35 par l'intermédiaire des moyens de liaison repérés d'une manière générale par la référence 36, ce poteau 35 étant relié au sol par l'intermédiaire des moyens de liaison repérés d'une manière générale par la référence 37.

Les moyens de liaison 36 sont constitués par une attache souple qui comprend, dans cet exemple, un anneau 38 fixé à l'extrémité de la barre transversale 4, à l'opposé de la barrette 15, ainsi qu'un cordon 39, par exemple élastique, qui entoure le poteau 35 et qui maintient l'anneau 38.

Les moyens de liaison 37 comprennent une plaque 40 posée sur le sol et munie d'un piquet 40a qui est enfoncé dans le sol, par exemple dans la neige, ainsi qu'un bloc 41 en un matériau élastique, par exemple en caoutchouc, qui est monté sur la face supérieure de la plaque 40 et sur lequel est fixé l'extrémité inférieure du poteau 35.

La prévision d'un second poteau 35 associé au dispositif de sécurité 1 ne modifie pas l'utilisation et le fonctionnement de ce dernier. Simplement, la barre transversale 4 n'est pas détachable du poteau 35 qui lui même n'est pas détachable du sol de telle sorte que l'effet de la flexibilité de cette barre précédemment décrit est accru. En outre, compte tenu du fait que les attaches 38, 39 et 41 sont souples dans toutes les directions, le second poteau 35 ne présente pas de danger pour le skieur et on est certain que, si la barre flexible 4 est sollicitée en n'importe quel endroit de sa longueur, la barrette 15 se détache.

De plus, la prévision d'un second poteau 35 pour porter la barre transversale flexible 4 permet l'utilisation d'une barre beaucoup plus longue que celle qu'il est possible d'utiliser dans la variante de la figure 1.

Il est bien entendu que la présente invention ne se limite pas aux exemples de structure, de fonctionnement et d'utilisation décrits ci-dessus en référence au dessin.

On aurait pu en effet décrire des moyens de liaison de structure différente, prévoir des barres transversales s'étendant de part et d'autre du ou des poteaux qui les portent. On pourrait également combiner de manière différente les différents modes d'exécution proposés.

Quant aux utilisations du dispositif de sécurité de l'invention, elles ne se limitent naturellement pas à la surveillance de passages dangereux pour le skieur. Il peut être utilisé à chaque fois qu'une détection du passage d'un corps, d'un objet ou d'un appareil est souhaitée.

## Revendications

1. Dispositif de sécurité actionnable notamment par un corps en mouvement tel qu'une personne ou un objet, en particulier portillon de sécurité, comprenant :
   – un poteau (2) portant à distance du sol une barre transversale (4)

– des moyens de liaison (5) de la barre au poteau et des moyens de liaison (3) du poteau au sol, caractérisé en ce que
   – lesdits moyens de liaison (5) de la barre au poteau comprennent des moyens de maintien (14, 15) susceptibles de libérer la barre lorsqu'elle est soumise à un effort dû au passage ou au mouvement dudit corps ainsi que des moyens de connexion électriques (15, 18) sollicités lors de la libération de la barre,
   – ledit poteau ou ses moyens de liaison (3) au sol sont tels que ce poteau est rabattable.

2. Dispositif de sécurité selon la revendication 1, caractérisé par le fait que les moyens de liaison (5) de la barre au poteau sont pourvus desdits moyens de maintien libérables desdits moyens de connexion électriques.

3. Dispositif de sécurité selon l'une des revendications 1 et 2, caractérisé par le fait que lesdits moyens de liaison de la barre au poteau comprennent un organe libérable (15) sur lequel est fixée la barre (4) ainsi qu'un organe de retenue (14) fixé sur le poteau et maintenant l'organe libérable (15) sous l'effet d'un moyen élastique (7).

4. Dispositif de sécurité selon la revendication 3, caractérisé par le fait que lesdits moyens de connexion électriques (15, 18) sont agencés entre ledit organe libérable et ledit organe de retenue.

5. Dispositif de sécurité selon l'une des revendications 3 et 4, caractérisé par le fait que ledit organe libérable est constitué par une barrette (15) conductrice de l'électricité, ledit organe de retenue (14) comprenant des contacts électriques (18) contre lesquels est en appui cette barrette conductrice lorsqu'elle est accouplée à cet organe de retenue.

6. Dispositif de sécurité selon l'une des revendications 3 et 4, caractérisé par le fait que ledit organe libérable comprend un manchon (25) et que ledit organe de retenue comprend une partie en saillie (24) engagée dans le manchon, cette partie en saillie et ce manchon étant maintenus accouplés grâce à un ressort (29).

7. Dispositif de sécurité selon la revendication 6, caractérisé par le fait que lesdits moyens de connexion électriques comprennent une bague conductrice (31) montée dans ledit manchon (25) et des contacts électriques (32, 33) isolés montés sur ladite partie en saillie et en contact avec cette bague lorsque le manchon et la partie en saillie sont accouplés.

8. Dispositif de sécurité selon l'une quelconque des revendications précédentes, caractérisé par le fait que les moyens de liaison du poteau au sol comprennent une articulation (10) à axe sensiblement parallèle à la barre transversale (4) de telle sorte que le poteau est rabattable.

9. Dispositif de sécurité selon l'une quelconque des revendications précédentes, caractérisé par le fait qu'il comprend un second poteau (35) portant ladite barre transversale (4) à distance du poteau (2) précité ainsi que des moyens de fixation (36) de la barre à ce second poteau et des moyens de fixation (37) de ce second poteau au sol.

10. Dispositif de sécurité selon la revendication 9, caractérisé par le fait que lesdits moyens de fixation du second poteau à la barre transversale et/ou au sol comprennent une attache (38, 39, 41) souple et de préférence non détachable.

11. Dispositif de sécurité selon l'une quelconque des revendications précédentes, caractérisé par le fait que le poteau (20) est incliné vers l'avant.

12. Dispositif de sécurité selon l'une quelconque des revendications précédentes, caractérisé par le fait que l'extrémité inférieure du poteau est montée sur une plaque (6) se posant sur le sol et fixée à ce dernier par des moyens de fixation rapides tels que des piquets (7, 8).

13. Dispositif selon l'une quelconque des revendications précédentes, caractérisé par le fait que ladite barre transversale (4) est flexible.

14. Dispositif selon l'une quelconque des revendications précédentes, caractérisé par le fait que lesdits moyens de liaison dudit poteau au sol sont articulés de telle sorte qu'il est rabattable.

15. Dispositif selon l'une quelconque des revendications précédentes, caractérisé par le fait que ledit poteau est élastiquement déformable de telle sorte qu'il est rabattable.

**Patentansprüche**

1. Sicherheitsanlage, die von einem sich bewegenden Körper wie von einer Person oder einem Gegenstand aktiviert wird, insbesondere ein Sicherheitstor, bestehend aus:
– einem Ständer (2), der in einer gewissen Höhe über dem Boden eine Querstange (4) aufweist;
– Verbindungsmitteln (5) zwischen der Querstange und dem Ständer sowie Verbindungsmitteln (3) zwischen dem Ständer und dem Boden; dadurch gekennzeichnet, daß
– diese Verbindungsmittel (5) zwischen der Querstange und dem Ständer Haltemittel (14, 15), die die Querstange freigeben, sobald diese durch des Durchgang bzw. die Bewegung dieses Körpers eine Beanspruchung erfährt, sowie elektrische Anschußmittel (15, 18), die bei Freigabe der Querstange beansprucht werden, aufweisen,
– wobei dieser Ständer bzw. seine Verbindungsmittel (3) mit dem Boden so ausgelegt sind, daß der Ständer kippbar ist.

2. Sicherheitsanlage gemäß Anspruch 1, dadurch gekennzeichnet, daß die Verbindungsmittel (5) zwischen der Querstange und dem Ständer mit diesen lösbaren Haltemitteln dieser elektrischen Anschlußmittel ausgestattet sind.

3. Sicherheitsanlage gemäß einem der Ansprüche 1 und 2, dadurch gekennzeichnet, daß diese Verbindungsmittel der Querstange mit dem Ständer eine lösbare Einrichtung (15), an der die Querstange (4) befestigt ist, sowie eine Halteeinrichtung (14), die auf dem Ständer befestigt ist und diese unter der Wirkung eines elastischen Mittels (7) lösbare Einrichtung (15) hält, aufweisen.

4. Sicherheitsanlage gemäß Anspruch 3, dadurch gekennzeichnet, daß diese elektrischen Anschlußmittel (15, 18) zwischen dieser lösbaren Einrichtung und dieser Halteeinrichtung angeordnet sind.

5. Sicherheitsanlage gemäß einem der Ansprüche 3 und 4, dadurch gekennzeichnet, daß diese lösbare Einrichtung aus einer den elektrischen Strom leitenden Verbindungsbrücke (15) besteht, diese Halteeinrichtung (14) elektrische Kontakte (18) aufweist, auf denen diese leitende Verbindungsbrücke aufliegt, wenn sie an diese Halteeinrichtung angekoppelt ist.

6. Sicherheitsanlage gemäß einem Ansprüche 3 und 4, dadurch gekennzeichnet, daß diese lösbare Vorrichtung eine Hülse (25), und dieses Halteeinrichtung einen vorspringenden Teil (24) aufweist, der in diese Hülse eingreift, wobei dieser vorspringende Teil und diese Hülse mit Hilfe einer Feder (29) aneinandergekoppelt gehalten werden.

7. Sicherheitsanlage gemäß Anspruch 6, dadurch gekennzeichnet, daß diese elektrischen Anschlußmittel einen in diese Hülse (25) montierten Leiterring (31) sowie isoliert auf diesen vorspringenden Teil aufmontierte elektrische Kontakte (32, 33) aufweisen, die mit diesem Leiterring in Kontakt stehen, wenn die Hülse und der vorspringende Teil aneinandergekoppelt sind.

8. Sicherheitsanlage gemäß einem beliebigen der vorstehenden Ansprüche, dadurch gekennzeichnet, daß die Verbindungsmittel des Ständers mit dem Boden ein Gelenk (10) aufweisen, dessen Achse im wesentlichen parallel zur Querstange (4) verläuft, so daß der Ständer umkippbar ist.

9. Sicherheitsanlage gemäß einem beliebigen der vorstehenden Ansprüche, dadurch gekennzeichnet, daß sie einen zweiten Ständer (35), der diese Querstange (4) in einigem Abstand zum erstgenannten Ständer (2) trägt, sowie Befestigungsmittel (36) zwischen der Querstange und diesem zweiten Ständer sowie Befestigungsmittel (37) zwischen diesem zweiten Ständer und dem Boden aufweist.

10. Sicherheitsanlage gemäß Anspruch 9, dadurch gekennzeichnet, daß diese Befestigungsmittel zwischen dem zweiten Ständer und der Querstange und/oder dem Boden ein biegsames und vorzugsweise nicht abnehmbares Befestigungsstück (38, 38, 41) aufweisen.

11. Sicherheitsanlage,gemäß einem beliebigen der vorstehenden Ansprüche, dadurch gekennzeichnet, daß dieser Ständer nach vorne geneigt ist.

12. Sicherheitsanlage gemäß einem beliebigen der vorstehenden Ansprüche, dadurch gekennzeichnet, daß das untere Ende des Ständers auf einer Platte (6) montiert ist, die auf dem Boden aufliegt und auf diesem mit Befestigungsmitteln zur schnellen Befestigung, wie z.B. Pflöcken (7, 8), befestigt ist.

13. Sicherheitsanlage gemäß einem beliebigen der vorstehenden Ansprüche, dadurch gekennzeichnet, daß diese Querstange (4) biegsam ist.

14. Sicherheitsanlage gemäß einem beliebigen der vorstehenden Ansprüche, dadurch gekennzeichnet, daß diese Verbindungsmittel zwischen dem Ständer und dem Boden so angelenkt sind, daß dieser umkippbar ist.

15. Sicherheitsanlage gemäß einem beliebigen der vorstehenden Ansprüche, dadurch gekennzeichnet, daß dieser Ständer elastisch verformbar ist, so daß er umkippbar ist.


**Claims**

1. Safety device which can be activated , in particular by a moving body such as a person or an object, in particular a safety gate, comprising :
   – a post (2) carrying, at a distance from the ground, a crossbar (4),
   – means (5) for joining the bar to the post, and means (3) for joining the post to the ground, characterized in that :
   – the said means (5) for joining the bar to the post comprise holding means capable of releasing the bar when it is subjected to a force caused by the passage or the movement of the said body, and electrical connection means (15,18) stressed when the bar is released,
   – the said post or its means (3) for joining it to the ground are such that this post can be folden down.

2. Safety device according to claim 1, characterized in that the means (5) for joining the bar to the post are provided with the said holding means which can be released from the said electrical connection means.

3. Safety device according to either of Claims 1 and 2, characterized in that the said means for joining the bar to the post comprise a releasable member (15) on which is fastened the bar (4) and a retention member (14) fastened to the post and holding the releasable member (15) under the influence of an elastic means (7).

4. Safety device according to Claim 3, characterized in that the said electrical connection means (15,18) are arranged between the said releasable member and the said retention member.

5. Safety device according to either of Claims 3 and 4, characterized in that the said releasable member consists of an electrically conductive small bar (15) the said retention member (14) comprising electrical contacts (18) against which this small conductive bar bears when it is coupled to this retention member.

6. Safety device according to either of Claims 3 and 4, characterized in that the said releasable member comprises a sleeve (25) and that the said retention member comprises a projecting part (24) engaged in the sleeve, this projecting part and this sleeve being held coupled together by way of a spring (29).

7. Safety device according to Claim 6, characterized in that the said electrical connection means comprise a conductive ring (31) mounted in the said sleeve (25) and insulated electrical contacts (32,33) mounted on the said projecting part and in contact with this ring when the sleeve and the projecting part are coupled together.

8. Safety device according to any one of the preceding claims, characterized in that the means for joining the post to the ground comprises an articulation (10) with an axis substantially parallel to the crossbar (4) such that the post can be folded down.

9. Safety device according to any one of the preceding claims, characterized in that it comprises a second post (35) carrying the said crossbar (4) at a distance form the above mentioned post (2), and means (36) for fastening the bar to this second post and means (37) for fastening this second post to the ground.

10. Safety device according to Claim 9, characterized in that the said means for fastening the second post to the crossbar and/or to the ground comprise a flexible, and preferably non-detachable, attachment (38,39,41).

11. Safety device according to any one of the preceding claims, characterized in that the post (20) is inclined forwards.

12. Safety device according to any one of the preceding claims, characterized in that the lower end of the post is mounted on a plate (6) placed on the ground and fastened to the latter by quick-fastening means such as spikes (7,8).

13. Device according to any one of the preceding claims, characterized in that the said crossbar (4) is flexible.

14. Device according to any one of the preceding claims, characterized in that the said means for joining the said post to the ground are articulated such that is can be folded down.

15. Device according to any one of the preceding claims, characterized in that the said post is elastically deformable such that it can be folded down.

Fig. 1

EP 0 423 027 B1

Fig: 2

Fig:3

Fig: 5

Fig 4

11

Fig:6

EP 0 423 027 B1